# DEMANDE DE BREVET EUROPEEN

(11) **EP 0 922 751 A1**
(43) Date de publication de la demande: **16.06.1999**
(21) Numéro de dépôt: 98402871.2
(22) Date de dépôt: 19.11.1998
(51) Int. Cl.: C10L 3/00, E21B 37/06

(54) **Procédé pour retarder la croissance et/ou l'agglomération d'hydrates dans un effluent de production**

(30) Priorité: 25.11.1997 FR 9714890
(71) Demandeur: INSTITUT FRANCAIS DU PETROLE, 92500 Rueil Malmaison (FR)
(72) Inventeur: Toulhoat, Hervé, 95220 Herblay (FR); Sinquin, Anne, 92000 Nanterre (FR)

(57) **Abrégé**

On décrit un procédé pour retarder la croissance et/ou l'agglomération des hydrates au sein d'un fluide comprenant de l'eau et des gaz par addition d'inhibiteurs de croissance et/ou d'agglomération des hydrates de gaz comprenant un polymère essentiellement hydrosoluble caractérisé par un nombre total de degrés de liberté de rotation par unité de répétition statistique RDFTm supérieur à 9 et de préférence supérieur à 10, et un degré de répétition DP de l'unité de répétition statistique compris entre 18/RDFTm et 200 000, de préférence compris entre 20/RDFTm et 100 000.

Le ou les inhibiteurs de croissance et/ou d'agglomération sont incorporés au fluide à traiter en général à une concentration de 0,05 % à 5 % en masse par rapport à la teneur en eau du milieu.

## Description

L'invention concerne un procédé pour inhiber ou retarder la croissance ou/et l'agglomération des hydrates de gaz naturel, de gaz de pétrole ou d'autres gaz, par utilisation d'au moins un additif. Les gaz qui forment des hydrates peuvent notamment comprendre au moins un hydrocarbure choisi parmi le méthane, l'éthane, l'éthylène, le propane, le propène, le n-butane et l'iso-butane, et éventuellement de l'H₂S et/ou du CO₂.

L'invention concerne également une méthode pour déterminer l'efficacité d'un additif de type polymère hydrosoluble dans un tel procédé.

Il est connu que des hydrates se forment lorsque l'eau se trouve en présence de gaz, soit à l'état libre, soit à l'état dissous dans une phase liquide, telle qu'un hydrocarbure liquide, et lorsque la température atteinte par le mélange notamment d'eau, de gaz et éventuellement d'hydrocarbures liquides, tels que de l'huile, devient inférieure à la température thermodynamique de formation des hydrates, cette température étant donnée pour une composition des gaz connue et lorsque leur pression est fixée.

La formation d'hydrates peut être redoutée, notamment dans l'industrie pétrolière et gazière, pour lesquelles les conditions de formation d'hydrates peuvent être réunies. En effet, pour diminuer le coût de production du pétrole brut et du gaz, tant au point de vue des investissements qu'au point de vue de l'exploitation, une voie envisagée, notamment en production en mer, est de réduire, voire de supprimer, les traitements appliqués au brut ou au gaz à transporter du gisement à la côte et notamment de laisser toute ou une partie de l'eau dans le fluide à transporter. Ces traitements en mer s'effectuent en général sur une plate-forme située en surface à proximité du gisement, de manière que l'effluent, initialement chaud, puisse être traité avant que les conditions thermodynamiques de formation des hydrates ne soient atteintes du fait du refroidissement de l'effluent avec l'eau de mer.

Cependant, comme cela arrive pratiquement, lorsque les conditions thermodynamiques requises pour former des hydrates sont réunies, l'agglomération des hydrates entraîne le blocage des conduites de transport par création de bouchons qui empêchent tout passage de pétrole brut ou de gaz.

La formation de bouchons d'hydrates peut entraîner un arrêt de la production et provoquer ainsi des pertes financières importantes. De plus, la remise en service de l'installation, surtout s'il s'agit de production ou de transport en mer, peut être longue, car la décomposition des hydrates formés est très difficile à réaliser. En effet, lorsque la production d'un gisement sous-marin de gaz naturel ou de pétrole et de gaz comportant de l'eau atteint la surface du sol marin et est ensuite transportée au fond de la mer, il arrive, par l'abaissement de la température de l'effluent produit, que les conditions thermodynamiques soient réunies pour que des hydrates se forment, s'agglomèrent et bloquent les conduites de transfert. La température au fond de la mer peut être, par exemple, de 3 ou 4 °C.

Des conditions favorables à la formation d'hydrates peuvent aussi être réunies de la même façon à terre, pour des conduites pas (ou pas assez profondément) enfouies dans le sol terrestre, lorsque par exemple la température de l'air ambiant est froide.

Pour éviter ces inconvénients, on a cherché, dans l'art antérieur, à utiliser des produits qui, ajoutés au fluide, pourraient agir comme inhibiteurs en abaissant la température thermodynamique de formation des hydrates. Ce sont notamment des alcools, tels que le méthanol, ou des glycols, tels que le mono-, le di- ou le tri-éthylèneglycol. Cette solution est très onéreuse car la quantité d'inhibiteurs à ajouter peut atteindre 10 à 40 % de la teneur en eau et ces inhibiteurs sont difficiles à récupérer complètement.

On a également préconisé l'isolation des conduites de transport, de manière à éviter que la température du fluide transporté n'atteigne la température de formation des hydrates dans les conditions opératoires. Une telle technique est, elle aussi, très coûteuse.

On a encore décrit l'utilisation d'additifs capables de modifier le mécanisme de formation des hydrates, puisque, au lieu de s'agglomérer rapidement les uns aux autres et de former des bouchons, les hydrates formés se dispersent dans le fluide sans s'agglomérer et sans obstruer les conduites. On peut citer à cet égard : la demande de brevet EP-A-323 774 au nom de la demanderesse, qui décrit l'utilisation de composés amphiphiles non-ioniques choisis parmi les esters de polyols et d'acides carboxyliques, substitués ou non-substitués, et les composés à fonction imide ; la demande de brevet EP-A-323 775, également au nom de la demanderesse, qui décrit notamment l'utilisation de composés appartenant à la famille des diéthanolamides d'acides gras ou de dérivés d'acides gras; le brevet US-A-4 856 593 qui décrit l'utilisation de composés tensioactifs tels que des phosphonates organiques, des esters phosphates, des acides phosphoniques, leurs sels et leurs esters, des polyphosphates inorganiques et leurs esters, ainsi que des homopolyacrylamides et des copolymères acrylamide-acrylates; et la demande de brevet EP-A-457 375, qui décrit l'utilisation de composés tensioactifs anioniques, tels que les acides alkylarylsulfoniques et leurs sels de métaux alcalins.

Des composés amphiphiles obtenus par réaction d'au moins un dérivé succinique choisi dans le groupe formé par les acides et les anhydrides polyalkénylsucciniques sur au moins un monoéther de polyéthylèneglycol ont également été proposés pour réduire la tendance à l'agglomération des hydrates de gaz naturel, de gaz de pétrole ou d'autres gaz (demande de brevet EP-A-582 507).

Par ailleurs, on a également préconisé l'utilisation d'additifs capables d'inhiber ou de retarder la formation et/ou la croissance des hydrates. On peut citer à cet égard la demande de brevet EP-A-536 950, qui décrit l'utilisation de dérivés de la tyrosine, la demande internationale WO-A-93/25798, qui décrit l'utilisation de composés homopolymères et copolymères de la N-vinyl-2-pyrrolidone et leurs mélanges, la demande internationale WO-A-94/12 761 et le brevet US-A-5 432 292 qui décrivent l'utilisation de la poly (N-vinyl-2-pyrrolidone), de l'hydroxyéthyl cellulose et de leurs mélanges ou d'un terpolymère à base de N-vinyl-2-pyrrolidone, N-vinyl-E-caprolactame et de diméthylaminoéthyl méthacrylate, commercialisé sous le nom de GAFFIX VC-713. La demande internationale WO-A-95/19408 décrit plus généralement l'utilisation de polymères aliphatiques contenant des N-hétérocycles carbonylés dans des formulations complexes. Il en est de même de la demande internationale WO-A-9532 356, qui décrit notamment l'utilisation de terpolymère à base de N-vinyl-2-pyrrolidone, d'acrylamido méthyl propane sulfonate et d'acrylamide. Les demandes internationales WO-A-95/17 579 et WO-A-96/04 462 décrivent l'utilisation de dérivés ammonium, sulfonium et phosphonium alkylés soit seuls soit mélangés à un inhibiteur de corrosion.

Enfin la demande internationale WO-A-97/07 320 décrit l'utilisation d'additifs possédant un squelette polymérique et un groupement " invité ", qui peut s'insèrer dans les cavités des hydrates, ce dernier étant relié au squelette polymérique via un groupement "ancrage". De tels additifs sont des inhibiteurs de formation et/ou d'agglomération des hydrates de gaz, s'ils répondent aux critères suivants : le squelette polymérique associé aux groupements "ancrage" et "invité" doivent conduire à un additif essentiellement hydrosoluble, le groupement " ancrage " doit être hydrophile et contenir de 1 à 4 atomes pouvant développer des liaisons hydrogène, le groupement " invité " est hydrophobe ou amphiphile d'un diamètre de Van Der Waals moyen compris entre 3,8 et 8,6 angströms et possédant un ratio atomes de carbone sur hétéroatomes supérieur ou égal à environ 2 pour 1.

On a maintenant découvert que certains composés essentiellement hydrosolubles permettent, à de faibles concentrations, de retarder la croissance et/ou l'agglomération des hydrates de gaz naturel, de gaz de pétrole ou d'autres gaz, avec une très grande efficacité. Eventuellement, ces composés présentent également un effet d'inhibiteur de formation des hydrates.

Ainsi, l'invention propose un procédé pour retarder la croissance et/ou l'agglomération et éventuellement pour retarder la formation des hydrates au sein d'un fluide comprenant de l'eau et un gaz, dans des conditions où des hydrates peuvent se former (à partir de l'eau et du gaz), caractérisé en ce qu'on incorpore audit fluide au moins un polymère essentiellement hydrosoluble caractérisé par une flexibilité du ou des unités de répétition statistique (ou monomères) supérieure à un certain seuil, et une gamme de masses moléculaires. La flexibilité du polymère est mesurée par l'indice RDFTm, nombre total de degré de liberté de rotation par unité de répétition statistique plus précisemment défini par la suite. La masse moléculaire est caractérisée par le degré de répétition moyen DP de l'unité de répétition statistique. Selon l'invention, RDFTm doit être supérieur à 9 et de préférence supérieur à 10, tandis que DP est compris entre 18/RDFTm et 200000, de préférence entre 20/RDFTm et 100 000.

La (ou les) structure(s) inhibitrice(s) de croissance et/ou d'agglomération considérée(s) dans la présente invention est (sont) caractérisée(s) en ce qu'elle(s) appartien(nen)t à un domaine défini par deux paramètres identifiés comme les descripteurs structuraux déterminants de l'activité inhibitrice. Ces descripteurs ont été déterminés comme suit.

Le lien direct entre chaleur d'adsorption d'une impureté à l'interface cristal / solution de croissance, et ralentissement de la croissance cristalline est bien établi dans la littérature scientifique (voir par exemple *Concepts de la cristallisation en solution,* Boistelle R., in "Actualités Néphrologiques", Crosnier et al. Eds, Flammarion Médecine Sciences, 1985, p 159-202.). On a obtenu des évaluations de la chaleur d'adsorption d'un grand nombre de polymères hydrosolubles à l'interface eau/hydrate de méthane. Ces évaluations de la chaleur d'adsorption résultent de simulations de dynamique moléculaire menées sur des modèles atomistiques très détaillés et soigneusement validés. A la suite de ces travaux de recherche, on a découvert que l'origine microscopique de l'affinité d'un polymère hydrosoluble pour une interface eau/hydrate de méthane réside principalement dans une diminution de l'énergie moyenne de déformation intra-moléculaire de l'additif lorsqu'il est transféré depuis le solvant jusqu'à l'interface. La part d'interactions spécifiques comme la liaison hydrogène, ou non spécifiques comme les forces de Van der Waals, s'est avérée négligeable, aussi bien pour les polymères neutres, que pour les polyélectrolytes que l'on a modélisés. Il en resulte que l'affinité du polymère pour l'interface est avant tout déterminée par sa déformabilité microscopique, ou flexibilité, que l'on peut caractériser par la valeur RDFTm, et dont le mode de calcul est défini ci-dessous. C'est ainsi que l'on a découvert l'existence d'une corrélation linéaire entre la chaleur d'adsorption par unité de répétition statistique (ou monomère) Q_{ads} d'un additif de type polymère hydrosoluble à l'interface eau/hydrate et le nombre total de degrés de liberté de rotation par monomère (RDFTm). On a ensuite confirmé expérimentalement que l'indice RDFTm permet effectivement de classer a priori l'efficacité inhibitrice de la croissance et/ou de l'agglomération des hydrates de gaz .

RDFTm, le nombre total de degrés de liberté de rotation par unité de répétition statistique, est défini comme le rapport entre Nrot et DP, où Nrot est défini selon la formule (4.12) page 88 du livre *"Prediction of Polymer Properties, Second* *Edition, Revised and Expanded"* de Jozef Bicerano, Marcel DEKKER Inc., New York, 1996. Selon cette formule, Nrot = NBBrot + NSGrot. Les grandeurs NBBrot et NSGrot, descripteurs heuristiques de la flexibilité sont des nombres réels calculés selon les règles suivantes:
1) Chaque liaison simple du squelette du polymère contribue pour + 1 à NBBrot pourvu que cette liaison simple ne soit pas incluse dans un cycle.
2) Chaque liaison simple dans un groupe latéral, ou reliant un groupe latéral au squelette, contribue pour + 1 à NSGrot, pourvu que :
   a) une rotation autour de l'axe de cette liaison change les coordonnées d'au moins un atome ; et
   b) cette liaison simple ne soit pas incluse dans un cycle.
3) Si les coordonnées de tous les atomes restent inchangées après rotation autour de l'axe d'une liaison simple dans un groupe latéral, ou autour de l'axe d'une liaison simple reliant un groupe latéral au squelette, cette liaison simple ne contribue pas à NSGrot.
4) Les liaisons multiples, soit incluses dans le squelette soit dans les groupes latéraux, ne contribuent ni à NBBrot ni à NSGrot.
5) Les liaisons incluses dans des cycles rigides, soit dans le squelette soit dans les groupes latéraux, ne contribuent ni à NBBrot ni à NSGrot.
6)
   a) Chaque liaison d'un cycle "souple" inclus dans le squelette contribue pour + 0,5 à NBBrot.
   b) Chaque liaison d'un cycle "souple" inclus dans un groupe latéral contribue pour + 0,5 à NSGrot.
7)
   a) Les liaisons d'un cycle "semi-souple" le reliant directement à un cycle "rigide" ne contribuent ni à NBBrot ni à NSGrot.
   b) Chaque liaison simple d'un cycle "semi-souple" non directement reliée à l'un des cycles "rigides" avec lesquels il est condensé contribue pour + 0,5 soit à NBBrot soit à NSGrot.

Le squelette d'un polymère ou d'une unité de répétition statistique de ce polymère est défini comme un chemin percolant permettant de joindre les extrêmités du graphe constitué par les liaisons entre atomes autres que l'hydrogène. Un groupe latéral est défini comme une portion du graphe connectée au squelette par une seule simple liaison.

Les cycles "rigides" sont les cycles à caractère aromatique. Les cycles "semi-souples" sont des cycles "souples" condensés avec des cycles "rigides", les cycles "souples" tous les autres. Toutes ces définitions proviennent de l'ouvrage de référence cité plus haut.

Dans le procédé de l'invention, les polymères tels que décrits ci-dessus peuvent être ajoutés dans le fluide à traiter seuls ou sous forme de mélange de deux ou plusieurs d'entre eux. Lorsque plusieurs polymères sont utilisés en mélange, il peut s'agir d'homopolymères ou de copolymères qui diffèrent entre eux par exemple par la nature des motifs qui les composent et/ou par leur masse moléculaire.

Le polymère ou le mélange de polymères en toute proportion peut être ajouté dans le fluide à traiter à des concentrations allant en général de 0,05 à 5 % en masse, de préférence de 0,1 à 2 % en masse, par rapport à l'eau présente dans le fluide à traiter.

Par ailleurs, le polymère ou le mélange de polymères préconisé comme additif dans l'invention peut être mélangé à un ou plusieurs alcools (monoalcools ou polyols) renfermant par exemple de 1 à 6 atomes de carbone, plus particulièrement le mono-, le di- ou le tri-éthylèneglycol, l'éthanol ou le méthanol, ce dernier étant l'alcool préféré. Cet alcool (ou ces alcools) est (sont) ajouté(s) en général en des proportions allant de 0,5 à 20 % en masse, de préférence de 1 à 10 % en masse, par rapport à l'eau présente dans le fluide à traiter. Le polymère ou mélange de polymères considéré dans l'invention peut être alors préalablement solubilisé en milieu hydro-alcoolique et ensuite ajouté au milieu à traiter, de façon à obtenir des concentrations finales en additif allant en général de 0,05 à 5 % en masse, de préférence de 0,1 à 2 % en masse par rapport à l'eau présente dans le fluide à traiter.

La présence dans le milieu d'additif(s) retardant la croissance et/ou l'agglomération et ayant éventuellement un effet inhibiteur de formation tels que les polymères ou mélange de polymères préconisés dans l'invention et d'alcool(s) tels que par exemple le méthanol, permet, par leurs actions conjuguées, d'obtenir des retards à la croissance des hydrates et un fort ralentissement de la formation de bouchon dans les conduites et ce, d'une part, en diminuant les quantités d'additifs utilisés [alcool(s) et polymère(s)] et, d'autre part, en permettant surtout d'opérer dans une gamme de températures beaucoup plus basses.

Le polymère ou mélange de polymères essentiellement hydrosoluble considéré dans l'invention peut être utilisé soit en milieu eau pure, par exemple dans de l'eau de condensation, soit en milieu salin, par exemple dans de l'eau de production, dans l'eau de mer ou dans la saumure.

L'invention sera mieux comprise à la lecture des expérimentations suivantes, nullement limitatives. Les exemples 4 à 9 sont donnés à titre comparatif et ne font pas partie de l'invention.

### ÉVALUATION DES DESCRIPTEURS STRUCTURAUX DÉTERMINANT L'ACTIVITÉ INHIBITRICE DES ADDITIFS

Sans que cela limite d'une manière quelconque la portée de l'invention, le paramètre Nrot peut-être aisément calculé à partir de la formule développée d'un polymère quelconque en utilisant le module "Synthia" du logiciel "InsightII", distribué par la société Molecular Simulations Inc, 9685 Scranton Road, San Diego, Californie 92121-3752, USA.

Les grandeurs RDFTm ont été déterminées pour chaque type d'unité de répétition statistique par le module « Synthia ». De plus, le degré de polymérisation minimal DPmin (de préférence 20/RDFTm) - degré de polymérisation minimal nécessaire pour que la structure s'adsorbe sur le cristal d'hydrate - a été calculé, enfin la grandeur Dpeff, degré de polymérisation effectif de l'échantillon testé, a été calculé lorsque la masse moléculaire moyenne du polymère était connue.

### MÉTHODE EXPÉRIMENTALE

La procédure expérimentale de sélection des additifs est menée sur des hydrates de tétrahydrofuranne (THF). Une solution eau pure/THF (80/20 en masse) forme des hydrates sous pression atmosphérique à 4 °C (voir : *"Kinetic Inhibitors of Natural Gas Hydrates",* Sloan, E.D. et al., 1994).

Le dispositif utilisé est constitué de tubes de diamètre 16 mm, dans lesquels sont introduits 8 ml d'une solution aqueuse à 20 % en masse de THF contenant éventuellement l'additif à tester. On introduit dans chaque tube une bille en verre d'un diamètre de 8 mm, afin d'assurer un brassage correct de la solution. Les tubes sont placés sur un agitateur rotatif, qui tourne à 20 tours/min. Ce dernier est placé dans une enceinte réfrigérée à 2 °C.

Le principe de ce test est de déterminer le temps Δt nécessaire pour former une quantité donnée d'hydrates. Ce temps Δt correspond à l'intervalle mesuré entre le moment où on observe la formation des hydrates (apparition d'un trouble) et le moment ou un bouchon d'hydrates d'1cm d'épaisseur se forme dans le tube.

Chaque série de tests est menée en présence d'un mélange de référence ne contenant pas d'additif, et les Δt fournis pour un additif correspondent à une moyenne des temps mesurés sur 16 essais.

L'ensemble des résultats obtenus par le calcul ou par l'expérimentation sont rassemblés dans le tableau 1 ci-dessous.

**TABLEAU 1**

| Additif (% molaire des motifs) | Concentration (% en masse) | Conditions opératoires | RDFTm | DP min | DPeff | Δt (min) |
|---|---|---|---|---|---|---|
| Ex. 1 : | | | | | | |
| - **sans additif** | / | *eau pure/THF à 2°C* | | | | **17,0** |
| | | | | | | |
| - PGA | 0,25 | *eau pure/THF à 2°C* | 14 | 1 | 17 000 | 25,3 |
| - Homopolymère AMPS | 0,5 | *eau pure/THF à 2°C* | 10 | 2 | 22 | 23,9 |
| - Macromère M | 0,5 | *eau pure/THF à 2°C* | 23 | 1 | 1 | 21,4 |
| - Homopolymère A | 0,5 | *eau pure/THF à 2°C* | 23 | 1 | 45 | 30,7 |
| Ex. 2 : | | | | | | |
| - **sans additif** | / | *eau + 5%* | | | | **23,0** |
| | | *MeOH/THF* | | | | |
| - Macromère M | 0,5 | *à -1°C* | 23 | 1 | 1 | 26,3 |
| Ex.3 : | | *à -1°C* | | | | |
| - **sans additif** | / | | | | | **22,3** |
| | | *NaCl 3,5%/THF à* | | | | |
| - Macromère M | 0,5 | *-1°C* | 23 | 1 | 1 | 27,1 |
| - Homopolymère A | 0,5 | *-1°C* | 23 | 1 | 45 | 33,1 |
| - **sans additif** | / | *eau pure/THF à 2°C* | | | | **17** |
| Ex. 4 : | 0,5 | *eau pure/THF à 2°C* | 5,5 | 4 | 4545 | 19 |
| Ex. 5 : | 0,5 | *eau pure/THF à 2°C* | 5,5 | 4 | 13640 | 17,5 |
| Ex. 6 : | 0,5 | *eau pure/THF à 2°C* | 4 | 5 | 14300 | 17,1 |
| Ex. 7 : | 0,5 | *eau pure/THF à 2°C* | 4 | 5 | 14160 | 7,7 |
| Ex. 8 : | 0,5 | *eau pure/THF à 2°C* | 8,1 | 3 | N.D.* | 12,9 |
| Ex. 9 : | 0,3 | *eau pure/THF à 2°C* | 8,1 | 3 | N.D.* | 12,9 |
| Ex. 10 : | 0,5 | *eau pure/THF à 2°C* | 5,6 | 4 | 83600 | 13,1 |
| - **sans additif** | / | *NaCl 3,5%/THF à* | | | | **22,3** |
| | | *-1°C* | | | | |
| Ex. 10 : | 0,3 | *-1°C* | 5,6 | 4 | 83600 | 20,4 |

| | | | | | | |
|---|---|---|---|---|---|---|
| * N.D. : non déterminé. | | | | | | |

### EXEMPLE 1

Dans les conditions opératoires décrites ci-dessus, les solutions eau pure/THF ont un Δt moyen de 17,0 minutes.

Un polymère propylène glycol alginate (PGA) a été testé à la concentration de 0,25 % en masse dans les conditions décrites ci-dessus.

Pour cet additif la valeur de RDFTm est de 14 et le DPeff (17 000) est bien supérieur au DPmin (1). Selon les critères de sélection de l'invention, cet additif doit être efficace.

Le Δt moyen mesuré pour cet additif est de 25,3 minutes : l'additif est efficace.

Dans les conditions opératoires mises en oeuvre, l'addition de 0,5 % en masse de monométhacrylate de polyéthylène glycol comportant 6 enchaînements éthylène glycol, dénommé M dans la suite du texte, ralentit nettement la vitesse de croissance des cristaux d'hydrate de THF. Le Δt moyen passe de 17 minutes pour l'eau à 21,4 minutes en présence d'additif. De la même manière, cet additif entre bien dans le domaine des additifs efficaces, délimité par les grandeurs suivantes : un RDFTm de préférence supérieur à 10 et un DPeff compris, de préférence, entre 20/RDFTm et 100 000.

A partir de ce macromère M, un homopolymère a été synthétisé par polymérisation radicalaire en phase aqueuse. Ce polymère nommé homopolymère A comporte en moyenne 45 unités macromères.

Comme le macromère, les descripteurs structuraux calculés pour cet hompolymère répondent aux critères établis pour un additif efficace. En toute logique, et dans ces conditions, l'« effet polymère » c'est à dire une augmentation du nombre d'unités de répétition statistique efficaces, devrait conduire à une amélioration des performances par rapport au macromère M.

L'addition de 0,5 % de l'homopolymère A dans le milieu prolonge le Δt à 30,7 minutes (au lieu de 21,4 minutes pour le macromère M).

L'hypothèse ci-dessus est confirmée; le nombre de monomères inhibiteurs étant supérieur, le polymère est plus efficace que le monomère.

Une solution à 0,5 % en masse d'un homopolymère de 2-acrylamido-2-méthyl propane sulfonate de sodium poly (AMPS) d'une masse moléculaire moyenne d'environ 5000 a également été testée en milieu eau pure à 2 °C. Une valeur de RDFTm de 10 a été calculée pour ce polymère, son degré de polymérisation effectif est d'environ 22. Ce polymère devrait permettre de ralentir la vitesse de croissance des cristaux. Le poly (AMPS) a bien un effet inhibiteur, le Δt moyen mesuré pour cet additif est de 23,9 minutes.

Le macromère M et l'homopolymère A ayant un RDFTm de 23 et des DPeff respectifs de 1 et 45, ces valeurs restent inchangées quelque soit le solvant utilisé pour le test (hydroalcoolique ou milieu salin). Les exemples 2 et 3 confirment en effet que ces deux échantillons conservent leur qualité d'inhibiteur de croissance des hydrates (voir les résultats expérimentaux exemples 2 et 3).

### EXEMPLE 2

La procédure expérimentale de l'exemple 1 est répétée en remplaçant l'eau pure par un mélange eau pure + 5 % de méthanol en masse et en abaissant la température de l'enceinte réfrigérée à - 1 °C.

Dans ces conditions, le Δt moyen des solutions eau pure + 5 % de méthanol/THF en l'absence d'additif est de 23,0 minutes.

L'addition de 0,5 % en masse de macromère M prolonge le Δt moyen à 26,3 minutes.

### EXEMPLE 3

La procédure expérimentale de l'exemple 1 est répétée en remplaçant l'eau pure par une solution de NaCl 3,5 % en masse, la température de l'enceinte réfrigérée est abaissée à - 1 °C. Dans ces conditions, le Δt moyen des solutions NaCl/THF en l'absence d'additif est de 22,3 minutes.

Deux additifs, respectivement le macromère M et l'homopolymère A, ont été testés suivant le protocole ci-dessus à la concentration de 0,5 % en masse. Les valeurs de Δt moyen déterminées sont respectivement 27,1 minutes pour le macromère M et 33,1 minutes pour l'homopolymère A.

### EXEMPLES 4, 5, 6, 7, 8 et 9 (comparatifs)

Différents additifs sortant du cadre de l'invention ont été testés à titre de comparaison dans les conditions précédemment décrites (exemples 1, 2 et 3) :
Ex. 4 : Polyvinylpyrrolidone (masse moléculaire moyenne en poids : 500 000; 0,5 % en masse).
Ex. 5 : Polyvinylpyrrolidone (masse moléculaire moyenne en poids : 1,5 million ; 0,5 % en masse).
Ex. 6 : Polyacrylamide (masse moléculaire moyenne en poids : 1,0 million ; 0,5 % en masse).
Ex. 7 : Copolymère acrylamide/acide acrylique - 40/60 (masse moléculaire moyenne en poids : 1,0 million ; 0,5 % en masse).
Ex. 8 : GAFFIX VC - 713 (N-vinyl-2-pyrrolidone / N-vinyl-ε-caprolactame / diméthylaminoéthyl-méthacrylate ; 0,5 % en masse).
Ex. 9 : GAFFIX VC - 713 (0,3 % en masse).
Ex. 10 : Copolymère acide acrylique / acrylate de butyle - 55/45 (masse moléculaire moyenne en poids : 8,0 millions ; 0,5 % en masse).

Pour l'ensemble de ces échantillons, les valeurs de DPeff sont supérieures aux aux DPmin calculées, mais aucun ne répond au premier critère RDFTm supérieur à 9, dans ce cas l'augmentation du DPeff n'apporte pas d'amélioration quant aux performances de l'additif. L'ensemble des échantillons ne devrait, par conséquent, pas ralentir la croissance des cristaux.

Dans les conditions de test mises en oeuvre, ces additifs présentent des Δt nettement plus courts que les substances mentionnées dans l'invention, comme le montrent les résultats rassemblés dans le tableau ci-dessus. On remarque également que les deux PVP de masse moléculaire différentes qui ont été testées ont des Δt voisins. Lorsqu'un additif ne présente pas de propriétés inhibitrices de croissance des hydrates, l'augmentation du DPeff n'améliore pas ses performances, l'effet serait même inverse.

### EXEMPLE 10

Pour tester l'efficacité des produits utilisés dans le procédé de l'invention, en présence d'hydrates de méthane, on a procédé à des essais de formation d'hydrates à partir de gaz et d'eau, à l'aide de l'appareillage décrit ci-après.

L'appareillage comporte une boucle de 10 mètres constituée de tubes de diamètre intérieur égal à 7,7 mm, un réacteur de 2 litres comprenant une entrée et une sortie pour le gaz, une aspiration et un refoulement pour le mélange eau et additif initialement introduit. Le réacteur permet de mettre la boucle sous pression. Des tubes de diamètre analogue à ceux de la boucle assurent la circulation du fluide de la boucle au réacteur, et inversement, par l'intermédiaire d'une pompe à engrenages placée entre les deux. Une cellule saphir intégrée dans le circuit permet une visualisation du liquide en circulation et des hydrates quand ils se forment.

Pour déterminer l'efficacité des additifs selon l'invention, on introduit le fluide (eau et additif) dans le réacteur. L'installation est ensuite portée sous une pression de 7 MPa. La solution est homogénéisée par sa circulation dans la boucle et le réacteur pendant une heure à 20°C. La pression est maintenue constante par apport de méthane, et on impose une diminution progressive de la température (0,5 °C/min) de 20 °C à 3 °C, qui correspond à la température expérimentale choisie.

Le principe de ces essais est de déterminer, d'une part la température de formation des hydrates de méthane dans la boucle et d'autre part d'évaluer la vitesse de croissance et la quantité de cristaux d'hydrates formés. La détection de la formation des hydrates est détectée par une exothermie et une augmentation de la consommation de gaz.

En l'absence d'additif (milieu : eau désionisée), les hydrates de méthane se forment à une température voisine de 10,8 °C. A partir de la formation des premiers cristaux, on observe deux phases en ce qui concerne la consommation de gaz. Dans la première phase (environ 5 minutes) l'apport en gaz est très faible, puis, dans la seconde phase il devient extrêmement important (ouverture maximale du débitmètre) jusqu'au blocage complet de la circulation du mélange fluide + hydrates dans l'ensemble boucle + réacteur. La seconde phase, correspondant à la croissance et à l'agglomération des cristaux dure 28 minutes et la consommation totale est en moyenne de 17 normaux litres.

L'addition de 0,5 % en masse du macromère M, par rapport à l'eau, diminue légèrement la température de formation des hydrates de méthane (10,3 °C), dans les conditions de pression et de température imposées pour ce test, et la consommation de gaz présente également deux phases. La première phase est analogue à celle observée en eau pure, l'apport de gaz dans le système est très faible. La seconde phase, en l'absence d'additif, correspond à la croissance explosive des cristaux (ouverture maximale du débitmètre apport important en gaz dans le milieu) et à leur agglomération jusqu'à obtenir un bouchage de la boucle. En présence de 0,5 % du macromère M la croissance est cristaux est très nettement ralentie. L'apport en gaz dans le milieu est environ deux fois moins important (l'ouverture du débitmètre est d'environ 50 % de sa capacité maximale). La phase correspondant à la croissance et à l'agglomération des cristaux se déroule sur une durée moyenne de 50 minutes soit pratiquement dans un laps de temps de fois plus important. In fine, la consommation totale est quasiment identique.

## Revendications

1. Procédé pour retarder la croissance et/ou l'agglomération et éventuellement pour retarder la formation des hydrates au sein d'un fluide comprenant de l'eau et au moins un gaz, dans des conditions où des hydrates peuvent se former à partir de l'eau et dudit gaz, par incorporation audit fluide d'au moins un polymère ou copolymère hydrosoluble, caractérisé en ce que l'on détermine, pour un polymère ou copolymère hydrosoluble donné, le nombre total de degrés de liberté de rotation par unité de répétition statistique RDFTm et le degré de répétition DP de l'unité de répétition statistique, et en ce que, si RDFTm est supérieur à 9 et DP compris entre 18/RDFTm et 200 000, ledit polymère ou copolymère hydrosoluble est incorporé audit fluide susceptible de former des hydrates.

2. Procédé selon la revendication 1, caractérisé en ce que ledit polymère ou copolymère hydrosoluble est incorporé audit fluide susceptible de former des hydrates s'il présente un nombre total de degrés de liberté de rotation par unité de répétition statistique RDFTm supérieur à 10 et un degré de répétition DP de l'unité de répétition statistique compris entre 20/RDFTm et 100 000.

3. Procédé selon la revendication 1 ou 2, caractérisé en ce que ledit polymère ou copolymère est ajouté dans le fluide à traiter à une concentration de 0,05 à 5 % par rapport à l'eau présente dans le fluide à traiter.

4. Procédé selon la revendication 3, caractérisé en ce que ladite concentration est de 0,1 à 2 % en masse par rapport à l'eau présente dans le fluide à traiter.

5. Procédé selon l'une des revendications 1 à 4, caractérisé en ce que ledit polymère ou copolymère est mélangé à au moins un alcool choisi parmi les monoalcools et les polyols renfermant de 1 à 6 atomes de carbone, en une proportion de 0,5 à 20 % en masse par rapport à l'eau présente dans le fluide à traiter.

6. Procédé selon la revendication 5, caractérisé en ce que ledit alcool est le mono-, le di- ou le triéthylèneglycol, l'éthanol ou le méthanol.

7. Procédé selon l'une des revendications 5 et 6, caractérisé en ce que ledit polymère ou copolymère est préalablement dissous en milieu hydro-alcoolique puis ajouté au milieu à traiter, de façon à obtenir une concentration finale en polymère ou copolymère de 0,05 à 5 % en masse par rapport à l'eau présente dans le fluide à traiter.
